# EUROPÄISCHE PATENTSCHRIFT

(11) **EP 2 615 047 B1**
(45) Veröffentlichungstag und Bekanntmachung des Hinweises auf die Patenterteilung: **24.01.2018**
(21) Anmeldenummer: 12197444.8
(22) Anmeldetag: 17.12.2012
(51) Int. Cl.: B65G 47/84, B65B 43/60, B67C 3/24, B67C 7/00, B65B 43/54

(54) **Trägerelement für Artikel oder Behälter**
Carrier element for articles or containers
Élément de support pour article ou récipient

(30) Priorität: 16.01.2012 DE 102012100318
(43) Veröffentlichungstag der Anmeldung: 17.07.2013
(73) Patentinhaber: Krones Aktiengesellschaft, 93073 Neutraubling (DE)
(72) Erfinder: Seger, Martin, 93073 Neutraubling (DE); Scheibenpflug, Robert, 93073 Neutraubling (DE)
(74) Vertreter: Benninger, Johannes

(56) Entgegenhaltungen:
- EP-A1- 0 727 367
- EP-A2- 0 535 946
- EP-A2- 0 579 486
- DE-A1- 10 127 107
- DE-A1- 19 727 355
- JP-A- H0 398 826
- JP-A- H10 236 448

## Beschreibung

Die vorliegende Erfindung betrifft eine Fertigungsanlage gemäß den Merkmalen des Oberbegriffs des Anspruchs 1.

In Verarbeitungsanlagen, insbesondere in Abfüllanlagen, werden Behälter, wie Flaschen oder Kanister aus Glas, Kunststoff, Metall oder Pappe mit jeweils einem definierten Inhalt befüllt und / oder verpackt, etikettiert etc. Die Behälter werden auf bestimmten Transportbahnen geführt, um eine korrekte Bearbeitung zu ermöglichen. Hierbei werden die Behälter vorzugsweise automatisch transportiert. Die Anlagen enthalten zum automatischen Transport der Behälter vorgesehene Führungsgeländer, Transportschnecken, Transportsterne, Transportbänder oder dergleichen. Die Transportelemente, beispielsweise die Transportsterne, sind häufig mit Greifmitteln ausgestattet, die eine sichere Übergabe der Behälter von einem Bearbeitungsmodul zu einem nachfolgenden Bearbeitungsmodul ermöglichen. Die Verwendung von Greifelementen ist aber bei einigen speziellen Artikel- oder Behälterformen nicht möglich bzw. schwierig. Beispielsweise können befüllte Infusionsbeutel schlecht über Greifer aufgenommen und weitergegeben werden, da hierbei die Gefahr sehr hoch wäre, dass die Infusionsbeutel durch die Greifer beschädigt werden. Dies würde dazu führen, dass der Inhalt aus dem Infusionsbeutel ausläuft oder aber zumindest kontaminiert und damit unbrauchbar wird. Um dies zu verhindern, werden spezielle Trägerelemente bzw. Carrier verwendet. Diese Trägerelemente dienen insbesondere dazu, solche Behälter sicher durch die Fertigungsanlage zu transportieren.

Die Trägerelemente weisen insbesondere einen Aufnahmebereich für die Aufnahme der Behälter oder Flaschen auf, der vorzugsweise einstellbar ausgebildet ist. D.h. im Aufnahmebereich sind Einstellmittel vorgesehen, die der Anpassung des Aufnahmebereiches an den zu transportierenden Behälter dienen.

Solche Trägerelemente werden beispielsweise auch für Behälter oder Flaschen mit einem unregelmäßigen Umfang, d.h. insbesondere einem nicht kreisrunden oder weitgehend nicht quadratischen Umfang verwendet, bei denen ansonsten eine genaue Ausrichtung erforderlich wäre, bevor diese Artikel mittels Greifelementen gehalten werden könnten. Durch die Verwendung von Trägerelemente kann somit auf eine entsprechende Sensorik und / oder Ausrichtvorrichtung verzichtet werden. Die Trägerelemente sind beispielsweise bei Anwendung als Flaschenträger nach oben hin offen gestaltet, damit die Behälter bzw. Flaschen von oben her eingesetzt werden können.

Die Trägerelemente bestehen meist aus Kunststoff und sind mit funktionswichtigen Merkmalen versehen, d.h. sie weisen beispielsweise an ihrer Außenmantelfläche Greifflächen für Übergabevorrichtungen und Gleitflächen zur Führung in der Fertigungsanlage auf.

Während ihres gesamten Lebenszyklus sind die Trägerelemente hohen Belastungen in der Fertigungsanlage ausgesetzt, da sie die Fertigungsanlage mehrfach durchlaufen. Dabei kann es leicht zu Beschädigungen an den Funktionsflächen der Trägerelemente kommen. Trotz solcher Beschädigungen an der Außenmantelfläche des Trägerelements bleibt der eingesetzte Behälter sicher geschützt. Sind die Funktionsflächen zu stark beschädigt, kann das Trägerelement nicht mehr länger verwendet werden, da eine fehlerfreie Übergabe von einem Bearbeitungsmodul zu einem weiteren Bearbeitungsmodul innerhalb der Fertigungsanlage, beispielsweise bei einem Stern zu Stern- Transfer, nicht mehr gewährleistet werden kann. Problematisch ist weiterhin, dass bei Verschmutzung der Funktionsflächen des Trägerelements während des Transports durch die Fertigungsanlage, die fehlerfreie Übergabe von einem Bearbeitungsmodul zu einem weiteren Bearbeitungsmodul ebenfalls beeinflusst werden kann. Verschmutzungen sind beispielsweise durch Auslaufen von zähflüssigem und / oder klebrigem Füllgut möglich.

Für die Übergabe der bekannten Trägerelemente werden Greifelemente verwendet, die an so genannten Kontaktflächen der Außenmantelfläche der Trägerelemente angreifen. Dies führt zu einer räumlich relativ großen Übergabeeinheit bestehend aus Trägerelement und Greifelement.

DE 10 2008 020 117 A1 beschreibt einen Träger zum Transportieren eines Behälters mit einer auf die Förderfläche der Förderstrecke stellbaren Basis und wenigstens einem Haltemittel zum Halten des Behälters. Der Behälter wird im Träger nur im Kopfbereich abgestützt, so dass der Träger für viele unterschiedliche Behälterausbildungen verwendbar ist.

WO 1995 030 611 A1 zeigt ein Trägerelement, in den die zu transportierenden Behälter eingestellt werden. Zur Positionierung des Trägerelementes auf einem Förderer umfasst das Trägerelement speziell ausgebildete Bereiche 32d, 32e der unteren Außenmantelfläche, die beispielsweise in entsprechende Führungsgeländer eingreifen. Weiterhin umfasst die Außenmantelfläche des Trägerelements Aussparungen 32b, 32c. Anhand der Ausrichtung dieser Aussparungen kann über entsprechende Sensorik die korrekte Ausrichtung des Trägerelements überprüft werden.

Das Dokument EP 0535946 A2 beschreibt eine Fertigungsanlage nach dem Oberbegriff des Anspruchs 1. Zum Fördern von Gegenständen im Lauf eines Prozesses, insbesondere in einer Getränkeabfüllanlage, sind Behälterhalteorgane 11 vorgesehen, wobei ein erster Positionierzapfen 47B von unten her in ein erstes Positionierloch des Behälterhalteorgans 11 eingreift und ein zweiter Positionierzapfen 42 von unten her in das zweite Positionierloch 11c des Behälterhalteorgans 11 eingreift.

Das Dokument EP 0727367 A1 offenbart ein Trägerelement für Artikel mit einem externen Rahmenelement, das eine Kammer umfasst, die eine einseitige Öffnung aufweist. In der Kammer ist ein flexibles Halteelement angeordnet, dass den gehaltenen Artikel immer in einer gewünschten zentralen Position in der Kammer fixiert.

Das Dokument EP 0579486 A2 beschreibt einen Träger für den Probenröhrchentransport. Hierbei werden lauter gleichartige Trägerelemente aneinandergereiht und bilden somit einen Gesamt- Träger. Insbesondere dienen die durch die Öffnungen 74, 96 definierten hohlen Innenbereiche nicht der Herstellung einer kraft- und / oder formschlüssigen klemmenden Verbindung zu einem Kopplungsmittel 50 der Fertigungsanlage, sondern der Verbindung der Probenröhrchen untereinander zu einem Gesamt- Träger.

Das Dokument DE 19727355 A1 zeigt eine Transporteinrichtung für Gegenstände, insbesondere zum Transport von Behältern zwischen den verschiedenen Arbeitsstationen einer Füll- und Verschließmaschine. An einem endlos umlaufenden Zahnriemen ist eine Vielzahl einzelner Trägerelemente lösbar befestigt. Jedes der Trägerelemente hat eine zentrale zylindrische Öffnung 17, 18, 19, deren Innendurchmesser im Wesentlichen den Außendurchmessern des zugehörigen Haltebolzens des Zahnriemens entspricht.

Das Dokument JP 10-236448 beschreibt ein Trägerelement für Gegenstände mit einem unteren Befestigungsbereich mit Öffnungen 17, in die von außen korrespondierende Elemente eingreifen können und Dokument JP 3-98826 offenbart ein weiteres Trägerelement.

Das Dokument DE 10127107 A1 beschreibt einen Beutelträger mit einem Grundträger und zwei auf dem Grundträger angeordneten aufrecht stehenden Führungsschienen.

Ziel der vorliegenden Erfindung ist eine einfache Übergabe von einem ersten zu einem zweiten Bearbeitungsmodul innerhalb einer Fertigungsanlage, die wenig anfällig für äußere Beschädigungen ist, zu erreichen. Die obige Aufgabe wird durch die Fertigungsanlage nach Anspruch 1 gelöst. Weitere vorteilhafte Ausgestaltungen werden durch die Unteransprüche beschrieben.

Die Erfindung betrifft eine Fertigungsanlage. Insbesondere dient das Trägerelement der Aufnahme von Flüssigkeitsbehältern und dem Transport derselben durch eine Befüllungs- und / oder Verpackungsanlage. Solche Trägerelemente werden insbesondere verwendet, um zu verhindern, dass bei der Übergabe der Artikel von einem ersten Bearbeitungsmodul zum nächsten, zweiten Bearbeitungsmodul, dieselben direkt mit den Übergabemitteln, beispielsweise mit Greifern o.ä. in Kontakt kommen. Solche Trägerelemente kommen auch zum Einsatz, wenn die Artikel oder Behälter eine ungünstige Form oder Beschaffenheit aufweisen, um diese direkt sicher greifen zu können. Beispielsweise können mittels solcher Trägerelemente auch Artikel sicher bearbeitet werden, die keine ebene Standfläche aufweisen oder deren Standfläche im Vergleich zur Höhe der Artikel verhältnismäßig klein ist, so dass die Artikel leicht umkippen.

Das Trägerelement umfasst einen Aufnahmebereich mit einer Aufnahmeöffnung für den Artikel oder den Behälter. Im Aufnahmebereich können weiterhin spezielle Einstellmittel vorgesehen sein, um den Aufnahmebereich an den jeweils transportierten Artikel oder Behälter anzupassen, damit dieser im Trägerelement sicher und stabil gehalten wird. Insbesondere kann es für bestimmte Fertigungsschritte notwendig sein, dass der Artikel oder Behälter im Trägerelement weitgehend unbeweglich fixiert ist. Handelt es sich beispielsweise um ein Trägerelement, in dem der Artikel oder Behälter hängend gehalten wird, müssen weiterhin spezielle Haltemittel vorgesehen sein, die den Artikel sicher am Trägerelement halten.

Weiterhin umfasst das Trägerelement einen Befestigungsbereich, der räumlich getrennt vom Aufnahmebereich angeordnet ist. Der Befestigungsbereich weist mindestens einen hohlen Innenbereich auf. Dieser Innenbereich weist mindestens eine nach außen offene Verbindung auf. Insbesondere umfasst eine Außenwand des Befestigungsbereichs mindestens eine Öffnung, die diese offene Verbindung zum Innenbereich herstellt. In dem hohlen Innenbereich sind erste Funktionsflächen angeordnet, über die eine kraft- und / oder formschlüssige Verbindung zu einem Kopplungsmittel der Fertigungsanlage hergestellt werden kann. D.h. der Eingriff des mindestens einen Kopplungsmittels der Fertigungsanlage erfolgt über die Öffnung in der Außenwand des Befestigungsbereichs. Dadurch kann das Kopplungsmittel mit der ersten Funktionsfläche im Innenbereich des Trägerelements eine kraft- und / oder formschlüssige Verbindung herstellen.

Erfindungsgemäß sind die ersten Funktionsflächen als konkave oder konvexe Wölbung ausgebildet. Die Kopplungsmittel der Fertigungsanlage sind beispielsweise als Greifmittel, insbesondere als Greifklammern oder Greifzangen mit jeweils zwei Greifarmen ausgebildet. Die Greifarme weisen an ihren distalen Enden Greifflächen auf, die korrespondierend zu den ersten Funktionsflächen der Trägerelemente ausgebildet sind, insbesondere korrespondierend zu den konkaven oder konvexen Wölbungen der ersten Funktionsflächen. Über die Greifflächen des Kopplungsmittels und die ersten Funktionsflächen der Trägerelemente sind somit form- und kraftstabile Klemmverbindungen herstellbar.

Gemäß einer bevorzugten Ausführungsform der Verbindung ist der Aufnahmebereich oberhalb des Befestigungsbereichs angeordnet. Der Aufnahmebereich weist eine obenseitig offene Aufnahmeöffnung für den Artikel oder den Behälter auf. Der Befestigungsbereich umfasst mindestens eine Öffnung in einem vertikal zur Horizontalen angeordneten Außenwandbereich. Insbesondere ist der Befestigungsbereich weitgehend quaderförmig oder quaderähnlich ausgebildet und die Öffnung ist in einem seitlichen Außenwandbereich angeordnet. Die Öffnung stellt die notwendige offene Verbindung zum Innenbereich des Befestigungsbereichs her, so dass Kopplungsmittel der Fertigungsanlage in den Innenbereich eingreifen können.

Gemäß einer weiteren Ausführungsform der Erfindung können Aufnahmebereich und Befestigungsbereich auch nebeneinander angeordnet werden. Bei der Befestigung, beispielsweise beim Greifen des Trägerelementes durch Befestigungs- oder Kopplungsmittel der Fertigungsanlage, ist insbesondere die Ausrichtung des Trägerelementes wichtig. Der Befestigungsbereich muss dem Befestigungs- oder Kopplungsmittel zugewandt sein, um zu verhindern, dass der gehalterte Artikel durch die Befestigungs- oder Kopplungsmittel der Fertigungsanlage beschädigt werden. Gemäß einer dritten Ausführungsform der Erfindung ist der Befestigungsbereich oberhalb des Aufnahmebereiches angeordnet und die Artikel werden hängend transportiert. Beispielsweise können somit mit Flüssigkeit befüllte Plastikbeutel o.ä. gehalten und transportiert werden. Solche Beutel weisen beispielsweise einen oben angeordneten Gewindeverschluss auf. Der Aufnahmebereich kann bestimmte Haltemittel vorsehen, die die Beutel unterhalb oder am Gewindeverschluss sicher greifen und fixieren und anschließend hängend transportieren.

Die mindestens eine im Innenbereich angeordnete Funktionsfläche ist korrespondierend zu einer Kopplungsfläche eines Kopplungsmittels der Fertigungsanlage ausgebildet. Insbesondere sind zwei Funktionsflächen vorgesehen, die im Innenbereich des Befestigungsbereichs weitgehend gegenüberliegend angeordnet und korrespondierend zu Kopplungsflächen des Kopplungsmittels ausgebildet sind.

Alternativ kann auch eine Funktionsfläche vorgesehen sein, der ein magnetisches Mittel zugeordnet ist. Dementsprechend sind den korrespondierenden Kopplungsflächen der Kopplungsmittel der Fertigungsanlage korrespondierende magnetische Mittel zugeordnet. Somit ist zwischen der Funktionsfläche des Trägerelementes und der Kopplungsfläche eine magnet- und / oder formschlüssige Verbindung herstellbar. Durch die Kombination von Form- und Magnetschluss ist eine besonders sichere und gerichtete Übergabe des Trägerelementes möglich.

Vorzugsweise sind mindestens zwei erste Funktionsflächen an den Innenflächen von Außenwänden des Befestigungsbereichs angeordnet. Die Anordnung ist insbesondere spiegelsymmetrisch ausgebildet. Weist der Befestigungsbereich beispielsweise eine rechteckige Grundfläche auf, dann sind die ersten Funktionsflächen vorzugsweise an Innenseiten angeordnet, die senkrecht zu der Außenwand angeordnet sind, in der sich die mindestens eine Öffnung für den Zugriff der Kopplungsmittel in den Innenbereich befindet. Über die mindestens eine Öffnung werden die beiden Greifarme eines Klammergreifers zumindest teilweise in den Innenbereich des Befestigungsbereichs eingeführt. Oder aber das Trägerelement wird auf die Greifarme zumindest teilweise aufgesteckt. Die Greifarme werden soweit geöffnet, d.h. die distalen Enden der Greifarme werden so weit auseinander bewegt, bis die Greifflächen in die korrespondierenden Funktionsflächen des Trägerelements greifen. Der Klammergreifer wird in dieser Position fixiert bzw. verspannt und das Trägerelement wird somit fest durch den Klammergreifer gehalten. Um das Trägerelement wieder vom Klammergreifer zu lösen, wird zuerst die Fixierung der Greifarme gelöst und die Greifarme werden zumindest teilweise geschlossen. Anschließend kann das Trägerelement von den Greifarmen abgezogen oder die Greifarme aus dem Trägerelement herausgezogen werden.

Gemäß einer weiteren Ausführungsform umfasst der Befestigungsbereich eine stabilisierende Zwischenwand. Diese teilt den Befestigungsbereich in zwei weitgehend identische Innenbereiche. Hierbei können die mindestens zwei ersten Funktionsflächen an den Seitenflächen der Zwischenwand angeordnet sein, insbesondere sind die mindestens zwei ersten Funktionsflächen weitgehend spiegelsymmetrisch zueinander und spiegelsymmetrisch zu einer durch die Zwischenwand gebildete und / oder parallel zur Zwischenwand verlaufenden Symmetrieebene angeordnet. Der Befestigungsbereich muss nunmehr mindestens zwei Öffnungen aufweisen, wobei jeweils eine Öffnung eine offene Verbindung zu jeweils einem der beiden hohlen Innenbereiche bildet. Über die zwei Öffnungen wird gleichzeitig jeweils ein Greifarm des Klammergreifers zumindest teilweise in den jeweiligen Innenbereich des Befestigungsbereichs eingeführt. Oder aber das Trägerelement wird auf die Greifarme zumindest teilweise aufgesteckt. Die Greifarme werden nunmehr geschlossen, d.h. die distalen Enden der Greifarme werden soweit aufeinander zu bewegt, bis die Greifflächen in die korrespondierenden Funktionsflächen des Trägerelements greifen. Der Klammergreifer wird in dieser Position fixiert bzw. verspannt und das Trägerelement wird somit fest durch den Klammergreifer klammernd gehalten. Um das Trägerelement wieder vom Klammergreifer zu lösen, wird zuerst die Fixierung der Greifarme gelöst und die Greifarme zumindest teilweise geöffnet. Anschließend kann das Trägerelement von den Greifarmen abgezogen oder die Greifarme aus dem Trägerelement herausgezogen werden.

Die Kontakt- bzw. Funktionsflächen können sowohl in vertikaler, als auch in horizontaler Ausführung am Trägerelement angebracht werden. Eine Ausführung in dazwischen liegenden Ebenen ist ebenso möglich. Gemäß einer weiteren Ausführungsform weisen die Trägerelemente bodenseitige Öffnungen im unteren Befestigungsbereich auf. In diesem Fall greifen die Kopplungsmittel, beispielsweise die Greifarme, von unten her in den Innenbereich ein.

Weitere vorteilhafte Ausführungsformen weisen erste Funktionsflächen zur Herstellung einer ersten Verbindung mit einem ersten Kopplungsmittel und zweite Funktionsflächen zur Herstellung einer zweiten Verbindung mit einem zweiten Kopplungsmittel auf. Der Befestigungsbereich weist beispielsweise Öffnungen auf gegenüberliegenden Außenseiten auf. Durch die ersten Öffnungen der einen Außenseite kann das erste Kopplungsmittel der Fertigungsanlage auf erste Funktionsflächen im Innenbereich des Trägerelementes zugreifen, während das zweite Kopplungsmittel der Fertigungsanlage durch die zweiten Öffnungen der gegenüberliegenden Außenseite auf die zweiten Funktionsflächen im Innenbereich des Trägerelementes zugreifen kann.

Weiterhin ist denkbar, dass erste Kopplungsmittel über bodenseitige Öffnungen in den Innenbereich eingreifen und eine Wirkverbindung zu den ersten Funktionsflächen herstellen, während zweite Kopplungsmittel über seitliche Öffnungen in den Innenbereich eingreifen und eine Wirkverbindung zu zweiten Funktionsflächen herstellen. Hierbei muss insbesondere darauf geachtet werden, dass die seitlichen Öffnungen oberhalb der ersten Funktionsflächen angeordnet sind, um eine Kollision zwischen den ersten und den zweiten Kopplungsmitteln zu verhindern.

Die Übergabe der Trägerelemente kann insbesondere vorteilhaft gestaltet werden, wenn beispielsweise die ersten Funktionsflächen und Kopplungsmittel jeweils mit magnetischen Mitteln ausgestattet sind und die zweiten Funktionsflächen als Greifflächen und die zweiten Kopplungsmittel jeweils als mechanische Greifelemente ausgebildet sind. Somit kann die Übergabe von einem ersten zu einem zweiten Förder- oder Bearbeitungsmodul beispielsweise magnetisch erfolgen, während die Übergabe von dem zweiten auf ein drittes Förder- oder Bearbeitungsmodul mechanisch erfolgt.

Bei dem Trägerelement gemäß der vorliegenden Erfindung sind die Funktionsflächen, die mit den Kopplungsmitteln und / oder mit Übergabemitteln der Fertigungsanlage in Kontakt kommen, im Innerbereich des Befestigungsbereichs geschützt angeordnet. Äußere Beschädigungen bzw. Verformungen, sowie Materialabtragungen am Trägerelement, beispielsweise durch Verdrehungen in den Einlaufschnecken oder plötzlichen Maschinenstopp etc., wirken sich nicht auf die inneren Funktionsflächen aus. Diese bleiben weiterhin nutzbar und ein Austausch des Trägerelements entfällt. Die Lebensdauer des Trägerelements ist dadurch deutlich verlängert. Verschmutzungen an den inneren Funktionsflächen können aufgrund der gewählten Geometrie bestmöglich vermindert werden, so dass auch dadurch eine Verlängerung der Einsatzdauer und eine Verbesserung der hygienischen Bedingungen erzielt wird. Erfindungsgemäß ist vorgesehen, dass das Trägerelement eine erste im Innenbereich angeordnete Funktionsfläche umfasst. Wie beschrieben greifen Greifmittel o.ä. der Bearbeitungsmodule der Fertigungsanlage über Öffnungen in einem ersten Außenmantelbereich in den Innenbereich des Trägerelements ein und stellen über die Funktionsflächen eine form- und kraftschlüssige Verbindung zwischen dem Trägerelement und dem Bearbeitungsmodul her. Gemäß einer weiteren Ausführungsform sind magnetische Mittel vorgesehen, so dass zwischen dem Trägerelement und einem weiteren Bearbeitungsmodul eine magnetische Verbindung hergestellt werden kann. Hierbei handelt es sich um außenseitig angreifende magnetische Mittel zur Herstellung einer außenseitigen Magnetkopplung. Insbesondere sind einem zweiten Außenmantelbereich des Trägerelements magnetische Mittel zugeordnet. Vorzugsweise sind die magnetischen Mittel in einem zweiten Außenmantelbereich angeordnet, der dem ersten Außenmantelbereich mit den Öffnungen zum Innenbereich weitgehend gegenüber liegt.

Die Übergabe von einem ersten Bearbeitungsmodul, an dem die Trägerelemente über Greifmittel gehalten werden, die auf die Funktionsflächen im Innenbereich zugreifen, an ein zweites Bearbeitungsmodul, an dem die Trägerelemente über außenseitig angreifende magnetische Mittel gehalten werden, wird im Folgenden beschrieben: Die Halterung der Trägerelemente über die Funktionsflächen und Greifmittel des ersten Bearbeitungsmoduls wurde bereits oben ausführlich dargestellt. Das zweite Bearbeitungsmodul weist nunmehr magnetische Mittel auf, die von außen an dem Trägerelement angreifen. Insbesondere sind diese magnetischen Mittel beispielsweise in einer Art Taschen oder Mulden angeordnet, deren Form zumindest teilweise korrespondierend zur Form der Trägerelemente ausgebildet ist. Die Trägerelemente werden in die Taschen bzw. Mulden seitlich eingeschoben und über die korrespondierenden magnetischen Mittel von Trägerelement und Bearbeitungsmodul erfolgt ein magnetischer Kraftschluss, der das Trägerelement über den zweiten Außenmantelbereich sicher am zweiten Bearbeitungsmodul fixiert. Die form- und / oder kraftschlüssige Verbindung zwischen den innenliegenden Funktionsflächen des Trägerelements und dem Greifmittel des ersten Bearbeitungsmoduls wird gelöst und das Trägerelement kann nunmehr durch das zweite Bearbeitungsmodul weiter transportiert, bearbeitet etc. werden.

Das zweite Bearbeitungsmodul kann sternförmig oder linear aufgebaut sein, beispielsweise kann es einen Transportstern oder einen Linearförderer umfassen. Insbesondere können so genannte Carrier- Taschen oder Transportmulden für Trägerelemente an einer umlaufenden Transportkette angeordnet sein. Mit einem solchen Trägerelement kann wiederum eine abwechselnde Übergabe durchgeführt werden, wobei das Trägerelement beispielsweise von einem ersten Bearbeitungsmodul mit innenseitig angreifenden Greifmitteln an ein zweites Bearbeitungsmodul mit außenseitig angreifenden magnetischen Mitteln und anschließend an ein drittes Bearbeitungsmodul mit innenseitig angreifenden Greifmitteln übergeben wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt die Befestigung von Trägerelementen an einem Transportstern entsprechend dem bekannten Stand der Technik.
Figur 2 zeigt ein Trägerelement.
Figur 3 bis Figur 10 zeigen jeweils einen Horizontalschnitt durch den Haltebereich eines Trägerelementes.
Figur 11 zeigt die Befestigung von Trägerelementen an einem Transportstern.
Figuren 12 und 13 zeigen ein Transport- und Verteilsystem für Trägerelemente.
Figur 14 und Figur 15 zeigen den Vergleich bei Verwendung eines Verteilsterns mit innenliegenden Greifmitteln im Vergleich zu einem Verteilstern mit außenliegenden Greifmitteln.
Figur 16 zeigt noch einmal eine Übersicht über ein Verteilsystem entsprechend den Figuren 12 bis 15.
Figur 17 zeigt eine Befestigung eines Trägerelements an einem Transportstern mittels einer Magnetkopplung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

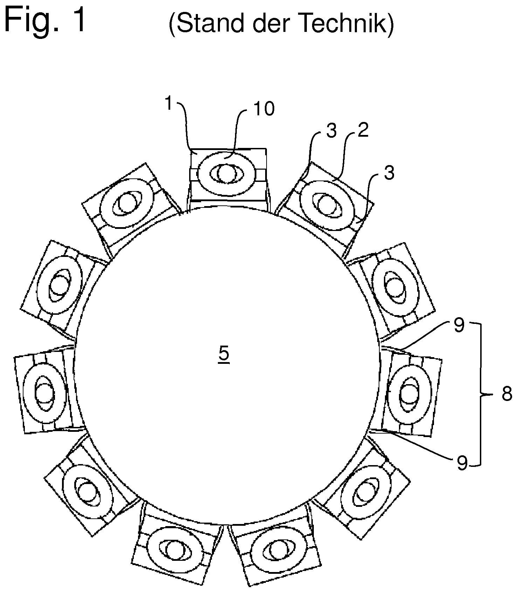

Figur 1 zeigt die Befestigung von Trägerelementen 1 für Artikel 10 an einem Transportstern 5 entsprechend dem bekannten Stand der Technik. Die Trägerelemente 1 bestehen meist aus Kunststoff und sind mit funktionswichtigen Merkmalen versehen. Sie weisen zum einen eine Aufnahme 2 für die Artikel 10 auf. Hierbei sind Verstelleinrichtungen 3 vorgesehen, die die Anpassung der Größe und Form der Aufnahme 2 an die jeweiligen Artikel 10 ermöglicht.

Der Transportstern 5 umfasst Greifmittel 8 mit Greifarmen 9, die die Trägerelemente 1 an deren Außenmantelflächen von außen greifen. Somit ist ein bestimmter Mindestabstand zwischen den Trägerelementen 1 notwendig, damit sich benachbarte Greifmittel 8 nicht gegenseitig behindern und / oder beschädigen. Dies führt zu einer räumlich relativ großen Übergabeeinheit bestehend aus Trägerelement 1 und Greifmittel 8. Bei diesen außenseitig angeordneten Greifmitteln 8 kann es leicht zu Beschädigungen an den Funktionsflächen der Trägerelemente 1 kommen. Äußere Beschädigungen bzw. Verformungen, sowie Materialabtragungen am Trägerelement entstehen beispielsweise durch Verdrehungen in Einlaufschnecken oder bei einem plötzlichen Maschinenstopp. Trotz solcher Beschädigungen an der Außenmantelfläche des Trägerelements 1 bleibt der in der Aufnahme 2 angeordnete Behälter 10 sicher geschützt. Sind die außenseitigen Funktionsflächen beschädigt, kann das Trägerelement 1 nicht mehr länger verwendet werden, da eine fehlerfreie Übergabe von einem Bearbeitungsmodul zu einem weiteren Bearbeitungsmodul (nicht dargestellt), beispielsweise bei einem Stern zu Stern- Transfer, nicht mehr gewährleistet werden kann.

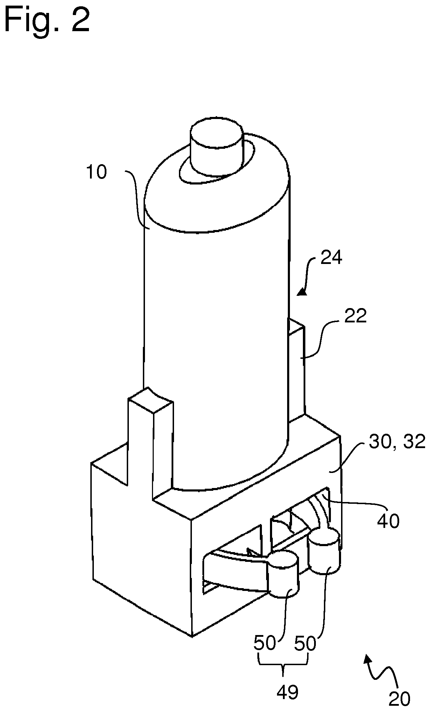

Figur 2 zeigt ein Trägerelement 20. Dieses umfasst einen oberen Aufnahmebereich 22 mit einer oberen Aufnahmeöffnung 24. Wie aus dem Stand der Technik bekannt, können Verstellvorrichtungen (nicht dargestellt) vorgesehen sein, die die Anpassung der Größe und Form der Aufnahme 22 bzw. Aufnahmeöffnung 24 an die jeweiligen Artikel 10 ermöglicht.

Weiterhin umfasst das Trägerelement 20 einen unteren Halte- oder Befestigungsbereich 30. Dieser weist einen hohlen Innenbereich auf. In diesem hohlen Innenbereich ist mindestens eine, vorzugsweise zwei Kontakt- bzw. Funktionsflächen angeordnet. Die Außenmantelfläche 32 des Haltebereiches 30 weist mindestens eine Öffnung 40 auf, die eine Verbindung zum hohlen Innenbereich herstellt, so dass weitere Funktionsteile von außen in den Innenbereich eingreifen können.

Gemäß der dargestellten Ausführungsform sind zwei Öffnungen 40 vorgesehen, durch die Greifmittel in den Innenbereich des Trägerelementes eingebracht werden können. Als Greifmittel wird beispielsweise ein Greiferpaar verwendet, insbesondere ein so genannter Klammergreifer 49 mit zwei Greifarmen 50. D.h. über die Öffnungen 40 können die Greifmittel auf die im Innenbereich angeordneten Funktionsflächen zugreifen. Die Greifmittel sind beispielsweise einem Transportstern oder einer anderen Transportvorrichtung der Fertigungsanlage wie beispielsweise einer vorzugsweise linearen Transferkette (nicht dargestellt) zugeordnet. Das Trägerelement 20 wird auf die sich in einem ersten entspannten Zustand befindlichen Greifarme 50 aufgesteckt oder diese werden in den Innenbereich des Trägerelements eingeschoben. Anschließend wird das Trägerelement 20 über die Greifarme 50 kraft- und/ oder formstabil gefasst. Nunmehr kann das Trägerelement 20 mit dem darin angeordneten Artikel 10 innerhalb der Fertigungsanlage transportiert und / oder verarbeitet werden. Auf diese Art und Weise können die Artikel 10 sicher weiteren Fertigungsschritten zugeführt werden. Vorteilhafterweise müssen die Artikel 10 bei dem Transport durch die Fertigungsanlage nie direkt gegriffen werden.

Die Funktions- bzw. Kontaktflächen, die mit den Greifarmen 50 in Kontakt kommen, sind erfindungsgemäß im Innenbereich des Haltebereichs 30 geschützt angeordnet. Äußere Beschädigungen bzw. Verformungen, sowie Materialabtragungen am Trägerelement 20 durch beispielsweise Verdrehungen in Einlaufschnecken oder plötzlichen Maschinenstopp wirken sich nicht auf die inneren Funktionsflächen aus. Diese bleiben weiterhin nutzbar und ein Austausch des Trägerelements 20 ist dadurch nicht nötig. Die Lebensdauer des Trägerelements 20 ist dadurch deutlich verlängert. Verschmutzungen an den inneren Funktionsflächen können aufgrund der gewählten Geometrie bestmöglich vermindert werden, so dass auch dadurch eine Verlängerung der Einsatzdauer erzielt wird.

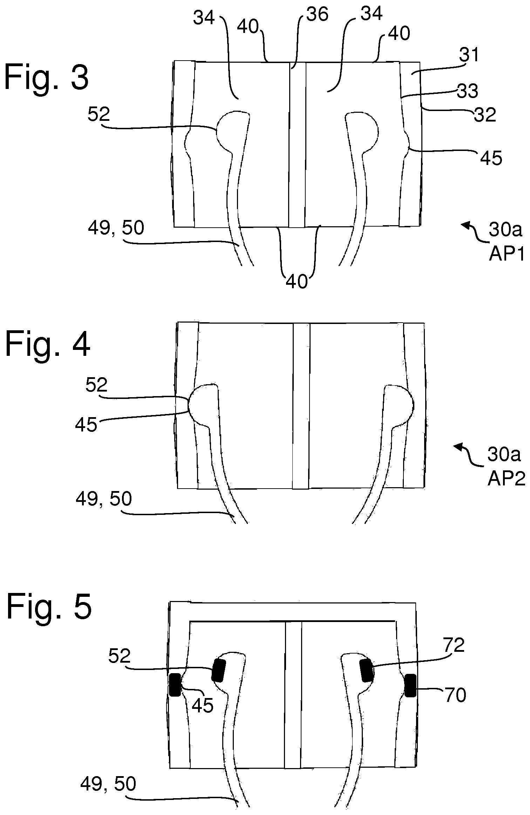

Figur 3 bis Figur 9 zeigen jeweils einen Horizontalschnitt durch den Haltebereich 30 eines Trägerelementes 20. Figuren 3 und 4 zeigen jeweils eine erste Ausführungsform. Der Haltebereich 30a ist in zwei Innenräume 34 unterteilt, zwischen denen eine stabilisierende Zwischenwand 36 angeordnet ist. Die Außenwände 31 weisen eine Außenmantelfläche 32 (vgl. auch Figur 2) und eine Innenmantelfläche 33 auf. In den einander gegenüberliegenden Innenmantelflächen 33 ist jeweils eine Kontaktfläche 45 angeordnet.

Zwei einander gegenüberliegende Außenwände 31 des Haltebereichs 30a weisen jeweils zwei einander gegenüberliegende Öffnungen 40 auf. Insbesondere befinden sich die Öffnungen 40 in Außenwandbereichen 31, die weitgehend senkrecht zu den Außenwandbereichen 31 mit den Kontaktflächen angeordnet sind. Alternativ kann auch vorgesehen sein, dass nur eine der Außenwände 31 Öffnungen 40 für den Zugriff von Greifmitteln 49 aufweist (vgl. Figur 5).

Über die Öffnungen 40 können die Greifarme 50 eines Greifmittels 49 in die Innenbereiche 34 des Haltebereiches 30 des Trägerelementes 20 eingreifen. Figur 3 zeigt einen ersten, offenen Arbeitszustand AP1, indem die Greifarme 50 nur teilweise in den Innenbereich 34 eingeschoben, aber noch nicht verspannt sind. Die Kontur der Kontaktflächen 45 ist jeweils auf die Greifergestalt abgestimmt, insbesondere auf die Kontur der distal angeordneten Greifflächen 52. Durch Betätigung der Greifmittel 49 werden die Greifarme 50 voneinander weg bewegt. Dadurch wird das Greifmittel 49 in einen zweiten verspannten oder geschlossenen Arbeitszustand AP2 überführt, in dem die Greifflächen 52 eine form- und kraftschlüssige Wirkverbindung mit den Kontaktflächen 45 bilden. Das Trägerelement 20 ist somit sicher und fest an den Greifmitteln 49 gehaltert und kann nunmehr problemlos weitergegeben, gefördert etc. werden.

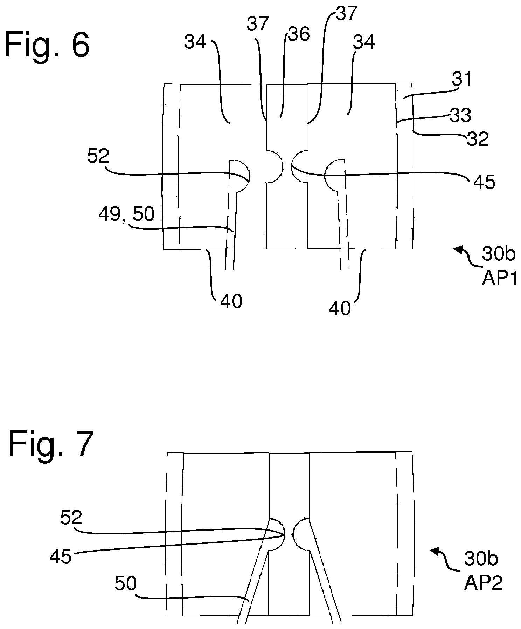

Figuren 6 und 7 zeigen eine zweite Ausführungsform eines Haltebereiches 30b. Dieser ist ebenfalls in zwei Innenbereiche 34 unterteilt, zwischen denen eine stabilisierende Zwischenwand 36 angeordnet ist. Bei dieser Ausführungsform sind die Kontaktflächen 45 den gegenüberliegenden Seitenflächen 37 der Zwischenwand 36 zugeordnet. Deshalb ist diese vorzugsweise stärker ausgeführt als im Ausführungsbeispiel gemäß den Figuren 3 bis 5. Hierbei werden die Greifflächen 52 der Greifarme 50 zuerst durch die Öffnungen 40 in die Innenbereiche 34 des Haltebereiches 30b eingeführt. Anschließend werden die Greifarme 50 gegeneinander und somit zusammen geführt, wodurch eine form- und kraftschlüssige Wirkverbindung zwischen den Greifflächen 52 und den Kontaktflächen 45 an der Zwischenwand 36 gebildet wird. Die Greifarme 50 greifen somit die Zwischenwand 36 des Haltebereiches 30b.

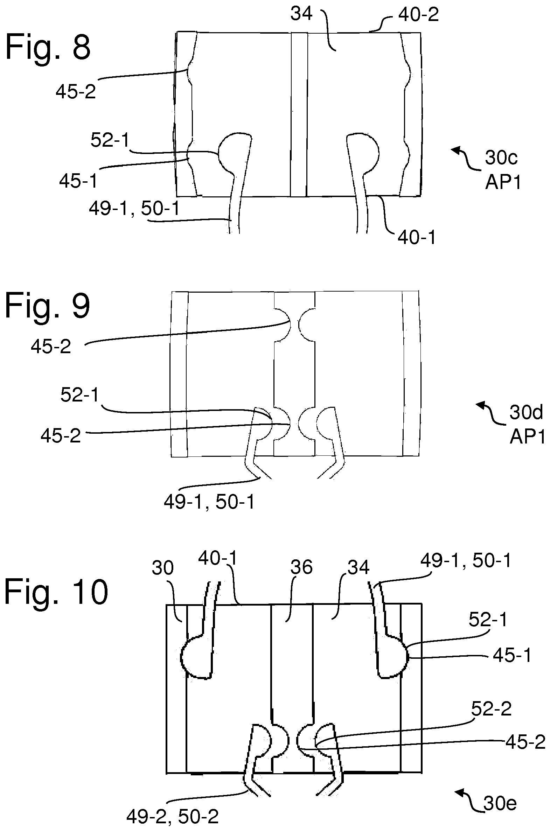

In den Figuren 3 bis 7 sind die Kontaktflächen 45 jeweils weitgehend mittig oder zentral in den jeweiligen Innen- bzw. Seitenflächen 33, 37 angeordnet. Figuren 8 und 9 zeigen Ausführungsformen, bei denen jeweils zwei Kontaktflächen 45-1 und 45-2 pro Innenfläche 33 oder Seitenfläche 37 angeordnet sind. Bei der dritten Ausführungsform eines Haltebereiches 30c gemäß Figur 8 sind die Kontaktflächen 45 den Innenmantelflächen 33 der Außenwände 31 zugeordnet, so dass die Greifarme 50 eines Greifmittels 49 auseinander gespreizt werden müssen, um eine sichere Halterung des Trägerelementes zu bewirken. Bei der vierten Ausführungsform eines Haltebereiches 30d gemäß Figur 9 sind die Kontaktflächen 45 den Seitenflächen 37 der Zwischenwand 36 zugeordnet, so dass die Zwischenwand 36 durch die Greifarme 50 des Greifmittels 49 eingeklemmt wird, um eine sichere Halterung des Trägerelementes zu bewirken. Trägerelemente mit Haltebereichen 30c, 30d können leicht von einem ersten Transportmittel auf ein zweites Transportmittel bzw. Bearbeitungsmodul o.ä. mit gleichen Greifmitteln 49 übergeben werden, beispielsweise von einem ersten Transportstern zu einem zweiten Transportstern, von einem Transportstern zu einem Transportband oder vice versa, im Rahmen einer Schnecken- Transportstern Übergabe usw.

Am ersten Transportmittel wird das Trägerelement über ein erstes Greifmittel 49-1 mit ersten Greifarmen 50-1 gehalten. Die ersten Greifarme 50-1 greifen über erste Öffnungen 40-1 in einem Außenwandbereich des Haltemittels 30c, 30d zumindest teilweise in den Innenbereich 34 ein. Durch Betätigen des ersten Greifmittels 49-1 sind die Greifarme 50-1 in den Arbeitszustand AP2 (vgl. Figuren 4 und 7) überführbar, bei dem zwischen den ersten Kontaktflächen 45-1 und den ersten Greifflächen 52-1 eine form- und kraftschlüssige Wirkverbindung besteht. Bei der Übergabe des Trägerelementes mit Artikel an ein zweites Transportmittel, werden zweite Greifarme eines zweiten Greifmittels (nicht dargestellt) durch zweite Öffnungen 40-2 zumindest teilweise in den Innenbereich 34 eingebracht. Durch Betätigen des zweiten Greifmittels sind die zweiten Greifarme in den gespannten Arbeitszustand AP2 (vgl. Figuren 4 und 7) überführbar. Nach Lösen des ersten Greifmittels 49-1 können die ersten Greifarme 50-1 über die Öffnungen 40-1 entfernt werden. Das Trägerelement und somit der darin angeordnete Artikel wird nunmehr über das zweite Greifmittel am zweiten Transportmittel gehalten.

Figur 10 zeigt eine fünfte Ausführungsform eines Haltebereiches 30e, bei der für ein erstes Greifmittel 49-1 mit Greifarmen 50-1, Kontaktflächen 45-1 an den Innenseiten 33 der Außenwände 31 des Haltebereiches 30e vorgesehen sind, während für das zweite Greifmittel 49-2 mit Greifarmen 50-2 jeweils zweite Kontaktflächen 45-2 an den Seitenflächen 37 der Zwischenwand 36 des Haltebereiches 30e vorgesehen sind. Die Übergabe des Trägerelementes von einem ersten Transportmittel mit ersten Greifmitteln 49-1 auf ein zweites Transportmittel, Verarbeitungsmodul etc. mit zweiten Greifmitteln 49-2 erfolgt analog zur Beschreibung der Ausführungsformen in Figur 8 und 9. Durch die Verwendung von solchen zweifach greifbaren Ausführungsformen 30c, 30d, 30e ist die Übergabe besonders einfach und sicher möglich.

Die Kontakt- bzw. Funktionsflächen 45 können sowohl in vertikaler, als auch in horizontaler Ausführung am Trägerelement angebracht werden. Eine Ausführung in dazwischen liegenden Ebenen ist ebenso möglich. In den Figuren 3 bis 10 sind jeweils Ausführungsformen des Haltebereiches 30 dargestellt, bei denen die Greifmittel 49 horizontal bzw. seitlich in den Innenbereich 34 eingreifen Es sind jedoch auch Trägerelemente 20 vorstellbar, die einen unteren Haltebereich 30 mit mindestens einer bodenseitigen Öffnung 40 aufweisen. In diesem Fall greift das Greifmittel 49 von unten her in den Innenbereich 34 ein. Ebenso sind Ausführungsformen denkbar, bei denen erste Greifmittel mit Greifarmen über bodenseitige Öffnungen in den Innenbereich eingreifen und eine Wirkverbindung zu entsprechenden ersten Kontaktflächen herstellen, während zweite Greifmittel mit zweiten Greifarmen über seitliche Öffnungen in den Innenbereich eingreifen und eine Wirkverbindung zu entsprechenden zweiten Kontaktflächen herstellen. Hierbei muss darauf geachtet werden, dass die seitlichen Öffnungen oberhalb der ersten Kontaktflächen angeordnet sind, um eine Kollision zwischen den ersten und den zweiten Greifmitteln zu verhindern.

Die Figur 5 zeigt weiterhin die zusätzliche Verwendung magnetischer Mittel 70, 72. Hierbei sind den Kontaktflächen 45 erste magnetische Mittel 70 zugeordnet und den korrespondierenden Greifflächen 52 der Greifmittel 49 der Fertigungsanlage sind korrespondierende magnetische Mittel 72 zugeordnet. Somit ist zwischen der Kontaktfläche 45 des Trägerelementes und der Greiffläche 52 des Greifmittels 49 eine zusätzliche magnet- formschlüssige Verbindung herstellbar. Durch die Kombination von Form- und Magnetschluss ist eine besonders sichere und gerichtete Übergabe des Trägerelementes möglich. Insbesondere können bei Verwendung von zusätzlichen magnetischen Mitteln 70, 72 auch Greifmittel wirksam eingesetzt werden, die nur einen Greifarm umfassen. Durch die magnetischen Mittel 70, 72 ist weiterhin eine korrekte Positionierung und eine sichere Halterung der Trägerelemente möglich.

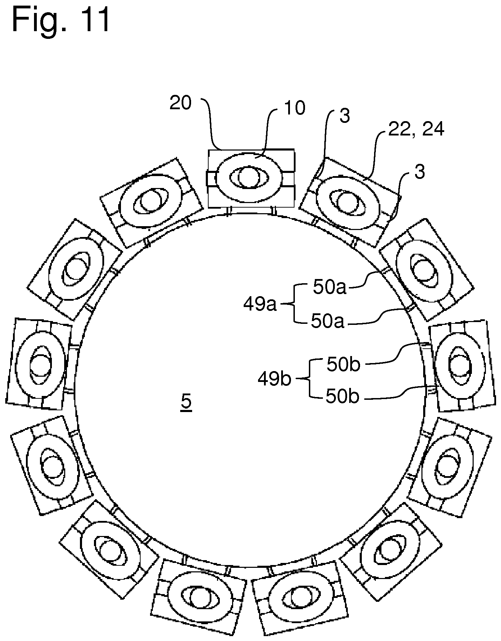

Figur 11 zeigt die Befestigung von Trägerelementen 20 an einem Transportstern 5. Bei der Verwendung der erfindungsgemäßen Trägerelemente 20, bei denen die Greifarme 50 der Greifmittel 49 der Transportmittel, beispielsweise des Transportsterns 5, in den Innenbereich des Haltebereichs eingreifen, können die Trägerelemente 20 im Vergleich zum Stand der Technik (siehe Figur 1) enger angeordnet werden. Somit können bei vergleichbarer Größe eines Transportstern 5 mehr Artikel gleichzeitig aufgenommen, befördert und / oder bearbeitet werden. Alternativ kann der Transportstern 5 bei gleicher Beladungsmenge kleiner gestaltet werden. Zudem wird dabei sicher gestellt, dass sich die benachbarten Greiferarmpaare 50a und 50b zur Aufnahme jeweils eines Trägerelementes 20 mit Artikel 10 nicht gegenseitig stören.

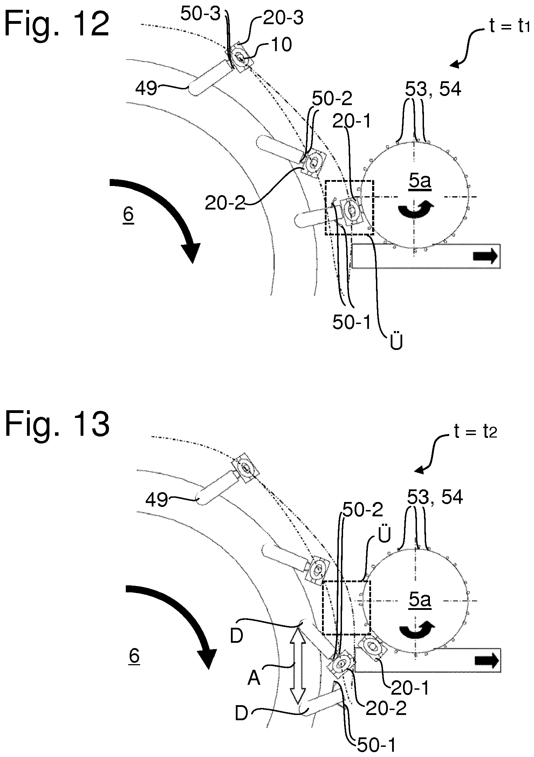

Figuren 12 und 13 zeigen ein Transport- und Verteilsystem für Trägerelemente 20 gemäß einer der Figuren 8 bis 10. Figur 12 zeigt die Übergabe eines Trägerelementes 20 mit Artikel 10 von einem Verteilstern 6 auf einen Transportstern 5a. D.h. die Trägerelemente 20 weisen jeweils vier Funktionsflächen auf, insbesondere zwei erste Funktionsflächen und zwei zweite Funktionsflächen. An einem Verteilstern 6 sind schwenkbare erste Greifmittel 49 mit Greifarmen 50 angebracht. Die Greifarme 50-2, 50-3 greifen seitlich in den Innenbereich der Trägerelemente 20 ein und bilden über die ersten Funktionsflächen eine feste Verbindung. Im Übergabebereich Ü greifen zweite, an einem Transportstern 5a angeordnete, Greifmittel 53 mit ihren Greifarmen 54 von der gegenüberliegenden Seite in den Innenbereich der Trägerelemente 20 ein und bilden über zweite Funktionsflächen eine feste Verbindung zwischen Trägerelement 20 und Transportstern 5a. Die Verbindung zwischen den Greifflächen 52-1 der ersten Greifarme 50-1 und den ersten Funktionsflächen im Innenbereich des Trägerelements 20 wird zeitgleich gelöst. Das Trägerelement 20 wird nunmehr über die Greifarme 53 am Transportstern 5a gehalten und weiter verarbeitet bzw. transportiert. Figur 12 zeigt das Verteilsystem zu einem Zeitpunkt t = t1 Es ist die Übergabe des Trägerelement 20-1 mit Artikel 10 vom Verteilstern 6 auf den Transportstern 5a dargestellt. Figur 13 zeigt dagegen den Zeitpunkt t = t2, zu dem der Transportstern 5 durch den Verteilstern 6 nicht mit einem weiteren Trägerelement 20-2 bestückt wird. Das Trägerelement 20-2 mit Artikel 10 wird stattdessen weiter transportiert, beispielsweise zu einem zweiten Transportstern (nicht dargestellt). Das Greifmittel 50-2 muss aus dem Übergabebereich Ü geschwenkt werden, um eine Kollision mit dem benachbarten Greifmittel 50-1 zu verhindern. A stellt den minimalen Abstand zwischen den Drehpunkten D von zwei benachbarten Greifmitteln 49 dar, der eingehalten werden muss, um wirksam einer Kollision derselben im Übergabebereich Ü zu verhindern.

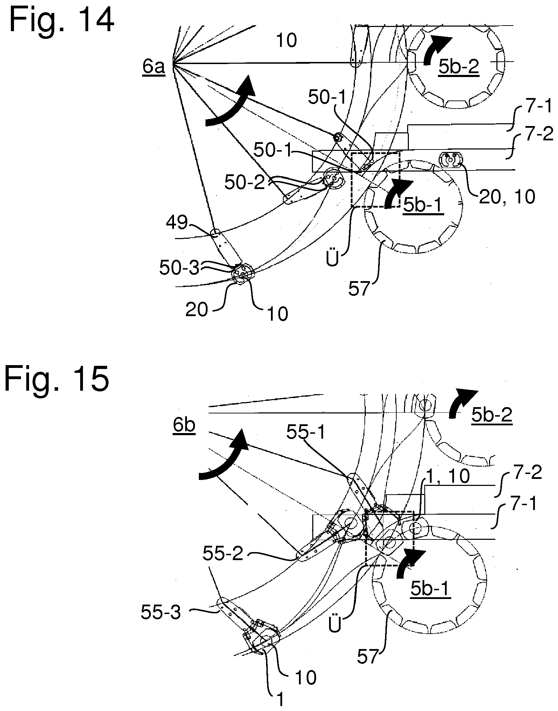

Figur 14 und Figur 15 zeigen den Vergleich bei Verwendung eines Verteilsterns 6a mit innenliegenden bzw. innen angreifenden Greifmitteln 49 (Figur 14) im Vergleich zu einem Verteilstern 6b mit außen liegenden bzw. außen angreifenden Greifmitteln 55 (Figur 15), wie es beispielsweise für herkömmlich bekannte Trägerelemente 1 verwendet werden kann. Für die in Figur 14 dargestellte Ausführungsform wird weitgehend auf die Beschreibung der Figuren 11 und 12 verwiesen. Ein Unterschied besteht darin, dass der Transportstern 5b keine Greifmittel für die Trägerelemente 20 aufweist. Stattdessen sind so genannte Transportmulden 57 vorgesehen, in korrespondierend zu einem Teilbereich der Trägerelemente 20 ausgebildet sind. Die über den Verteilstern 6a zugeführten Trägerelemente 20 werden jeweils in die Transportmulden 57 eingesetzt. Die form- und kraftschlüssige Verbindung zwischen den innenliegenden Funktionsflächen und den Greifarmen 50-1 wird gelöst und die Trägerelemente 20 mit den Artikeln 10 werden über den jeweiligen Transportstern 5b in den Transportmulden 57 zu einem Transportband 7-1 o.ä. transportiert. Im Beispiel ist die Übergabe eines über die Greifmittel 50-1 gehaltenen Trägerelementes 20 an einen ersten Transportstern 5b-1 dargestellt. Anschließend werden die Trägerelemente 20 an das Transportband 7-1 übergeben und beispielsweise stehend weiteren Fertigungsmodulen (nicht dargestellt) zugeführt. Alternativ kann vorgesehen sein, dass die Trägerelemente 20 direkt von den schwenkbaren Greifmitteln 49 an ein Transportband 7-2 übergeben werden.

Wird der ersten Transportstern 5b-1 über das Verteilsystem 6a nicht mit einem Transportelement 20 bestückt, sondern wird dieses weiter transportiert, beispielsweise zu einem zweiten Transportstern 5b-2, muss das Greifmittel 49-2 aus dem Übergabebereich Ü des ersten Transportsterns 5b-1 geschwenkt werden. Dadurch wird sichergestellt, dass das benachbarte Greifmittel 49-1 nicht berührt wird und somit die Übergabe an den Transportstern 5b-1 nicht beeinträchtigt wird.

Im Unterschied dazu greifen die Greifarme 56 der in Figur 15 dargestellten Greifmittel 55 des Verteilsterns 6b von außen an die Außenflächen der Trägerelemente 20 an. Ein solcher Verteilstern 6b ist somit zur Verteilung von herkömmlich bekannten Trägerelementen 1 auf mehrere weitere Verarbeitungsmodule (nicht dargestellt) geeignet. Die Übergabe an einen ersten Transportstern 5b-1 erfolgt weitgehend wie in Figur 14 beschrieben. Um sicherzustellen, dass die zweiten Greifmittel 55-2, die das gehalterte Trägerelement nicht an den ersten Transportstern 5b-2 sondern an den zweiten Transportstern 5b-2 übergeben, nicht mit den ersten Greifmitteln 55-1 kollidieren, muss der Abstand zwischen den so genannten außen angreifenden Greifmitteln 55 des Verteilsterns 6b größer gewählt werden als bei innen angreifenden Greifmitteln 49 vgl. Figur 14.

Die Verwendung der Trägerelemente 20 in Verbindung mit innen angreifenden Greifmitteln 49 erlaubt somit die Konstruktion von kleineren, platzsparenden und kostengünstigeren Anlagen.

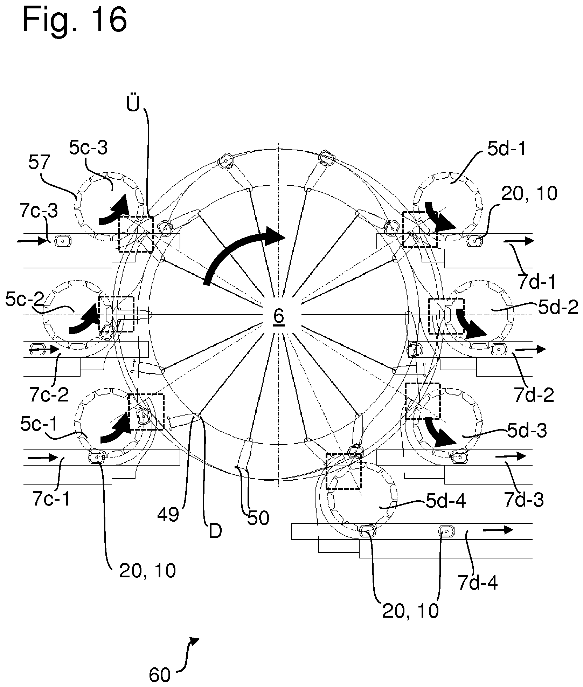

Figur 16 zeigt noch einmal eine Übersicht über ein Verteilsystem 60 entsprechend den Figuren 12 bis 15, insbesondere werden in diesem Verteilsystem 60 Trägerelemente 20 (vgl. Figuren 12 bis 14) verwendet. Der Verteilstern 6 weist entsprechende in den Innenbereich der Trägerelemente 20 eingreifende Greifmittel 49 mit Greifarmen 50 auf. Die Trägerelemente 20 mit Artikeln 10 werden über drei einlaufende Transportbänder 7c-1, 7c-2 und 7c-3 zu Einlaufsternen 5c-1, 5c-2 und 5c-3 gefördert. Die Trägerelemente 20 mit Artikeln 10 werden in entsprechende Transportmulden 57 der Einlaufsterne 5c-1, 5c-2 und 5c-3 aufgenommen und gemäß einer vorgegebenen Programm von Greifmitteln 49 des Verteilsterns 6 gegriffen. Die Greifmittel 49 sind jeweils um einen Drehpunkt D schwenkbar am Verteilstern 6 angeordnet, so dass die jeweils nicht zu beladenden Greifmittel 49 aus dem jeweiligen Übergabebereich Ü heraus schwenkbar sind, um eine Kollision benachbarter Greifmittel 49 zu vermeiden. Die Trägerelemente 20 mit Artikeln 10 werden über den Verteilstern 6 entsprechend dem vorgegebenen Programm jeweils Auslaufsternen 5d-1, 5d-2, 5d-3 oder 5d-4 zugeführt und von diesen an jeweils zugeordnete Transportbänder 7d-1, 7d-2, 7d-3 und 7d-4 übergeben. Ein solches Verteilsystem kann natürlich bei entsprechender Programmierung auch verwendet werden, um Artikel von vier Reihen auf drei Reihen aufzuteilen oder andere gewünschte Verteilungen durchzuführen.

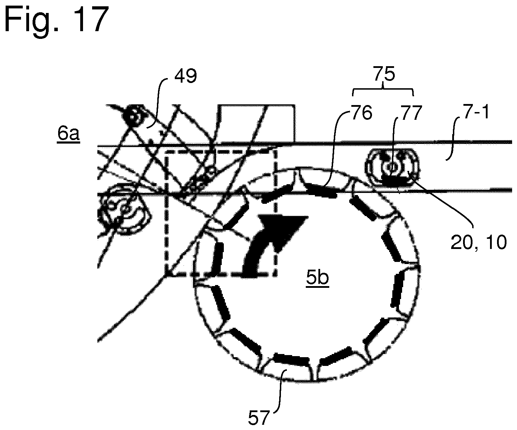

Figur 17 zeigt eine Befestigung eines Trägerelements 20 an einem Transportstern 5b-1 (vgl. Figur 14) in Transportmulden 57 über eine außenseitig angreifende Magnetkopplung 75. In den Transportmulden 57, die korrespondierend zu einem Teilbereich der Trägerelemente 20 ausgebildet sind, sind erste magnetische Mittel 76 angeordnet. Die Trägerelemente 20 weisen in dem zur Transportmulde 57 korrespondierendem Bereich zweite magnetische Mittel 77 im oder am Außenwandbereich auf. Die über den Verteilstern 6a zugeführten Trägerelemente 20 werden jeweils in die Transportmulden 57 eingesetzt. Eine formkraftschlüssige Verbindung wird durch die Geometrie der Transportmulden 57, insbesondere durch die korrespondierenden Konturen von Trägerelement 20 und Transportmulde 57 hergestellt. Eine kraftschlüssige Verbindung wird durch die magnetischen Mittel am Trägerelement 20 und in der Transportmulde 57 hergestellt. Durch die zusätzliche Magnetkopplung 75 werden die Trägerelemente 20 sicher in den Transportmulden 57 gehalten, beispielsweise auch entgegen einer Fliehkraft. Die form- undkraftschlüssige Verbindung zwischen den innenliegenden Funktionsflächen des Trägerelements 20 und den Greifarmen des Greifmittels 49 des Verteilsterns 6a wird gelöst und das Trägerelement 20 mit dem Artikel 10 wird über den Transportstern 5b zu einem Transportband 7-1 o.ä. transportiert.

Wie beschrieben kann mit einem solchen Trägerelement 20 wiederum eine abwechselnde Übergabe durchgeführt werden, wobei Greifmittel 49 von einer Seite her von einem ersten Betätigungsmodul (beispielsweise Verteilstern 6a) aus in den Innenbereich der Trägerelemente 20 eingreifen. Die Übergabe erfolgt durch Abgabe der Trägerelemente 20 an ein weiteres Betätigungsmodul (beispielsweise Transportstern 5b) mit magnetischen Mitteln, die an einem dem Außenwandbereich mit Öffnungen gegenüberliegenden Außenwandbereich der Trägerelemente ankoppeln.

### Bezugszeichenliste

- 1: Trägerelement
- 2: Aufnahme
- 3: Verstelleinrichtung
- 5: Transportstern
- 6: Verteilstern
- 7: Transportband
- 8: Greifmittel
- 9: Greifarm
- 10: Artikel
- 20: Trägerelement
- 22: Aufnahmebereich
- 24: Aufnahmeöffnung
- 30: Befestigungsbereich
- 31: Außenwand
- 32: Außenmantelfläche
- 33: Innenfläche
- 34: hohler Innenbereich
- 36: Zwischenwand
- 37: Seitenfläche
- 40: Öffnung
- 45: Kontaktfläche
- 49: Greifmittel / Klammergreifer
- 50: Greifarm
- 51: Greifarm
- 52: Greiffläche
- 53: Greifmittel
- 54: Greifarm
- 55: Greifmittel
- 56: Greifarm
- 57: Transportmulde
- 60: Verteilsystem
- 70: magnetisches Mittel
- 72: magnetisches Mittel
- 75: Magnetkopplung
- 76: magnetisches Mittel
- 77: magnetisches Mittel

- A: Abstand
- AP1: erster offener Arbeitszustand
- AP2: zweiter geschlossener Arbeitszustand
- t: Zeitpunkt
- Ü: Übergabebereich

## Patentansprüche

1. Fertigungsanlage mit einem ersten Bearbeitungsmodul und einem zweiten Bearbeitungsmodul und mindestens einem Trägerelement (20) für die Aufnahme und den Transport von Artikeln (10) oder Behältern innerhalb der Fertigungsanlage von dem ersten Bearbeitungsmodul zu dem zweiten Bearbeitungsmodul, wobei das Trägerelement (20) einen Aufnahmebereich (22) mit einer Aufnahmeöffnung (24) für den Artikel (10) oder den Behälter umfasst, und wobei das Trägerelement (20) einen vom Aufnahmebereich räumlich getrennten Befestigungsbereich (30) aufweist, wobei der Befestigungsbereich (30) mindestens einen hohlen Innenbereich (34) umfasst und mindestens eine erste Öffnung (40) in einem Außenwandbereich (31), durch welche eine offene Verbindung zum Innenbereich (34) hergestellt ist, wobei in dem hohlen Innenbereich (34) mindestens erste Funktionsflächen (45) angeordnet sind, über die eine kraft- und / oder formschlüssige Verbindung zu einem Kopplungsmittel (50) der Fertigungsanlage herstellbar ist, **dadurch gekennzeichnet, dass** die ersten Funktionsflächen (45) als konkave oder konvexe Wölbung ausgebildet sind und dass das Kopplungsmittel (50) als Greifklammer oder Greifzange mit jeweils zwei Greifarmen ausgebildet ist, wobei die Greifarme an ihren distalen Enden Greifflächen (52) aufweisen, die korrespondierend zu den konkaven oder konvexen Wölbungen der ersten Funktionsflächen (45) der Trägerelemente (20) ausgebildet sind, so dass über die Greifflächen (52) des Kopplungsmittels (50) und die ersten Funktionsflächen (45) der Trägerelemente (20) eine form- und kraftstabile Klemmverbindung herstellbar ist.

2. Fertigungsanlage nach Anspruch 1, wobei der Aufnahmebereich (22) oberhalb des Befestigungsbereichs (30) angeordnet ist und eine obenseitig offene Aufnahmeöffnung (24) für den Artikel (10) oder Behälter aufweist und wobei der Befestigungsbereich (30) eine quaderförmige Formgebung mit einer einen seitlichen Außenwandbereich (31) durchdringenden ersten Öffnung (40) besitzt.

3. Fertigungsanlage nach einem der voranstehenden Ansprüche, wobei zwei erste Funktionsflächen (45) im Innenbereich (34) des Befestigungsbereichs (30) weitgehend gegenüberliegend angeordnet sind.

4. Fertigungsanlage nach einem der voranstehenden Ansprüche, wobei der ersten Funktionsfläche (45) ein magnetisches Mittel (70) zugeordnet ist und wobei der korrespondierenden Kopplungsfläche (52) des Kopplungsmittels (50) ebenfalls ein magnetische Mittels (72) zugeordnet ist, so dass zwischen der ersten Funktionsfläche (45) und der Kopplungsfläche (52) eine magnet- und formschlüssige Verbindung herstellbar ist.

5. Fertigungsanlage nach einem der voranstehenden Ansprüche, wobei mindestens zwei erste Funktionsflächen (45) an Innenflächen (33) von Außenwänden (31) des Befestigungsbereichs (30) angeordnet sind, insbesondere wobei die mindestens zwei ersten Funktionsflächen (45) weitgehend spiegelsymmetrisch an gegenüberliegenden Innenflächen (33) angeordnet sind.

6. Fertigungsanlage nach einem der Ansprüche 1 bis 4, wobei der Befestigungsbereich (30) eine stabilisierende Zwischenwand (36) umfasst, die den Innenbereiche (34)in zwei weitgehend identische Innenbereiche teilt und wobei mindestens zwei ersten Funktionsflächen (45) an Seitenflächen (37) der Zwischenwand (36) angeordnet sind, insbesondere wobei die mindestens zwei ersten Funktionsflächen (45) weitgehend spiegelsymmetrisch zu einer durch die Zwischenwand (36) gebildeten und / oder parallel zur Zwischenwand (36) verlaufenden Symmetrieebene angeordnet sind.

7. Fertigungsanlage nach einem der Ansprüche 1 bis 6, wobei der Befestigungsbereich (30) unterhalb des Aufnahmebereiches (22) angeordnet ist und wobei die mindestens eine erste Öffnung (40) in einer Bodenfläche des Befestigungsbereiches (30) angeordnet ist, wodurch das mindestens eine Kopplungsmittel (50) der Fertigungsanlage von unten her in das Trägerelement (20) einbringbar ist.

8. Fertigungsanlage nach einem der voranstehenden Ansprüche, wobei das Trägerelement zweite Funktionsflächen (45-2) zur Herstellung einer zweiten Verbindung mit einem zweiten Kopplungsmittel umfasst, wobei die ersten Funktionsflächen (45-1) über die erste Öffnung (40-1) in einer Außenseite zugänglich sind und wobei die zweiten Funktionsflächen (45-2) über mindestens eine zweite Öffnung (40-2) in einer gegenüberliegenden Außenseite zugänglich sind.

9. Fertigungsanlage nach einem der Ansprüche 1 bis 7, wobei das Trägerelement zweite Funktionsflächen (45-2) zur Herstellung einer zweiten Verbindung mit einem zweiten Kopplungsmittel umfasst, wobei die zweiten Funktionsflächen (45-2) über mindestens eine bodenseitige Öffnung (40-1) zugänglich sind und wobei die ersten Funktionsflächen (45-1) über seitliche Öffnungen (40-2) zugänglich sind.

10. Fertigungsanlage nach Anspruch 9, wobei die zweiten Funktionsflächen und Kopplungsmittel magnetische Mittel umfassen.

11. Fertigungsanlage nach einem der Ansprüche 1 bis 8, wobei dem Außenmantelbereich des Trägerelementes magnetische Mittel (77) zugeordnet sind, die zweite Funktionsflächen zur Herstellung einer außenseitigen Magnetkopplung mit einem zweiten Kopplungsmittel darstellen.

## Claims

1. A production facility with a first processing module and a second processing module and at least one carrier element (20) for receiving and transporting articles (10) or containers within the production facility from the first processing module to the second processing module, wherein the carrier element (20) comprises a receiving portion (22) with a receiving opening (24) for the article (10) or the container; and wherein the carrier element (20) has a fastening portion (30) that is spatially separated from the receiving portion; wherein the fastening portion (30) comprises at least one hollow inside area (34) and at least one first opening (40) in an outer wall area (31), with an open connection to the inside area (34) being provided by the opening (40); wherein at least first functional surfaces (45) are disposed in the hollow inside area (34), by way of which functional surfaces (45) a force-locking and/or form-locking connection to a coupling means (50) of the production facility is producible; **characterised in that** the first functional surfaces (45) are formed as a concave or convex curvature, and **in that** the coupling means (50) is designed as gripping clamp or gripping pliers with two gripping arms each, wherein the gripping arms have gripping surfaces (52) at their distal ends, with the gripping surfaces (52) being designed to correspond to the concave or convex curvatures of the first functional surfaces (45) of the carrier elements (20) such that a form- and force-stable clamp connection is producible by way of the gripping surfaces (52) of the coupling means (50) and the first functional surfaces (45) of the carrier elements (20).

2. The production facility as recited in claim 1, wherein the receiving portion (22) is disposed above the fastening portion (30) and has a receiving opening (24) that is open at the top for the article (10) or container; and wherein the fastening portion (30) has a cuboid shaped design with a first opening (40) penetrating a lateral outer wall area (31).

3. The production facility as recited in one of the previous claims, wherein two first functional surfaces (45) are disposed largely opposite each other in the inside area (34) of the fastening portion (30).

4. The production facility as recited in one of the previous claims, wherein a magnetic means (70) is allocated to the first functional surface (45); and wherein a magnetic means (72) is likewise allocated to the corresponding coupling surface (52) of the coupling means (50) such that a magnet- and form-locking connection is producible between the first functional surface (45) and the coupling surface (52).

5. The production facility as recited in one of the previous claims, wherein at least two first functional surfaces (45) are disposed at inside surfaces (33) of outer walls (31) of the fastening portion (30), in particular, wherein the at least two first functional surfaces (45) are disposed largely mirror-symmetrically at oppositely located inside surfaces (33).

6. The production facility as recited in one of the claims 1 to 4, wherein the fastening portion (30) comprises a stabilising partition wall (36) dividing the inside area (34) into two largely identical inside areas; and wherein at least two first functional surfaces (45) are disposed at side surfaces (37) of the partition wall (36), in particular, wherein the at least two first functional surfaces (45) are disposed largely mirror-symmetrically to a plane of symmetry formed by the partition wall (36) and/or to a plane of symmetry running parallel to the partition wall (36).

7. The production facility as recited in one of the claims 1 to 6, wherein the fastening portion (30) is disposed below the receiving portion (22); and wherein the at least one first opening (40) is disposed in a base surface of the fastening portion (30), whereby the at least one coupling means (50) of the production facility is insertable into the carrier element (20) from below.

8. The production facility as recited in one of the previous claims, wherein the carrier element comprises second functional surfaces (45-2) for producing a second connection to a second coupling means; wherein the first functional surfaces (45-1) are accessible by way of the first opening (40-1) in an outer side; and wherein the second functional surfaces (45-2) are accessible by way of at least one second opening (40-2) in an oppositely located outer side.

9. The production facility as recited in one of the claims 1 to 7, wherein the carrier element comprises second functional surfaces (45-2) for producing a second connection to a second coupling means; wherein the second functional surfaces (45-2) are accessible by way of at least one opening (40-1) in the bottom side; and wherein the first functional surfaces (45-1) are accessible by way of lateral openings (40-2).

10. The production facility as recited in claim 9, wherein the second functional surfaces and coupling means comprise magnetic means.

11. The production facility as recited in one of the claims 1 to 8, wherein magnetic means (77) are allocated to the outer cover portion of the carrier element, with the magnetic means (77) constituting the second functional surfaces for producing an external magnetic coupling with a second coupling means.

## Revendications

1. Installation de fabrication comprenant un premier module de traitement et un deuxième module de traitement et au moins un élément de support (20) pour recevoir et transporter des articles (10) ou récipients à l'intérieur de ladite installation de fabrication depuis le premier module de traitement vers le deuxième module de traitement, dans laquelle ledit élément de support (20) comprend une zone de réception (22) ayant une ouverture de réception (24) pour l'article (10) ou le récipient, et dans laquelle l'élément de support (20) présente une zone de fixation (30) qui est séparée dans l'espace de ladite zone de réception, dans laquelle la zone de fixation (30) comprend au moins une zone intérieure creuse (34) et au moins une première ouverture (40) dans une zone de paroi extérieure (31), à travers laquelle est établie une communication ouverte avec la zone intérieure (34), au moins des premières surfaces fonctionnelles (45) étant disposées dans la zone intérieure creuse (34) par l'intermédiaire desquelles peut être réalisée une liaison entraînée par adhérence et/ou à engagement positif à un moyen de couplage (50) de l'installation de fabrication, **caractérisée par le fait que** lesdites premières surfaces fonctionnelles (45) sont réalisées en tant que courbure concave ou convexe et que ledit moyen de couplage (50) est réalisé en tant que crampon de préhension ou pince de préhension ayant respectivement deux bras de préhension, dans laquelle les bras de préhension présentent des surfaces de préhension (52) à leurs extrémités distales, qui sont réalisées de manière correspondante aux courbures concaves ou convexes des premières surfaces fonctionnelles (45) des éléments de support (20) de sorte qu'une liaison de serrage à stabilité de forme et de force peut être réalisée par l'intermédiaire des surfaces de préhension (52) du moyen de couplage (50) et des premières surfaces fonctionnelles (45) des éléments de support (20).

2. Installation de fabrication selon la revendication 1, dans laquelle la zone de réception (22) est disposée au-dessus de la zone de fixation (30) et présente une ouverture de réception (24) pour l'article (10) ou le récipient qui est ouverte sur la face supérieure, et dans laquelle la zone de fixation (30) présente une conformation en parallélépipède rectangle ayant une première ouverture (40) pénétrant une zone de paroi extérieure (31) latérale.

3. Installation de fabrication selon l'une quelconque des revendications précédentes, dans laquelle deux premières surfaces fonctionnelles (45) sont disposées dans ladite zone intérieure (34) de la zone de fixation (30) de manière à être situées dans une large mesure en regard l'une de l'autre.

4. Installation de fabrication selon l'une quelconque des revendications précédentes, dans laquelle un moyen magnétique (70) est associé à la première surface fonctionnelle (45), et dans laquelle un moyen magnétique (72) est associé également à la surface de couplage (52) correspondante du moyen de couplage (50) de sorte qu'une liaison entraînée par magnétisme et à engagement positif peut être réalisée entre la première surface fonctionnelle (45) et la surface de couplage (52).

5. Installation de fabrication selon l'une quelconque des revendications précédentes, dans laquelle au moins deux premières surfaces fonctionnelles (45) sont disposées sur des surfaces intérieures (33) de parois extérieures (31) de la zone de fixation (30), en particulier dans laquelle lesdites au moins deux premières surfaces fonctionnelles (45) sont disposées dans une large mesure à symétrie spéculaire sur des surfaces intérieures (33) opposées.

6. Installation de fabrication selon l'une quelconque des revendications 1 à 4, dans laquelle la zone de fixation (30) comprend une cloison (36) stabilisatrice qui divise ladite zone intérieure (34) en deux zones intérieures dans une large mesure identiques, et dans laquelle au moins deux premières surfaces fonctionnelles (45) sont disposées sur des surfaces latérales (37) de la cloison (36), en particulier dans laquelle lesdites au moins deux premières surfaces fonctionnelles (45) sont disposées dans une large mesure à symétrie spéculaire par rapport à un plan de symétrie formé par la cloison (36) et/ou s'étendant parallèlement à la cloison (36).

7. Installation de fabrication selon l'une quelconque des revendications 1 à 6, dans laquelle la zone de fixation (30) est disposée au-dessous de la zone de réception (22), et dans laquelle ladite au moins une première ouverture (40) est disposée dans une surface de fond de la zone de fixation (30) ce par quoi ledit au moins un moyen de couplage (50) de l'installation de fabrication peut être introduit d'en bas dans ledit élément de support (20).

8. Installation de fabrication selon l'une quelconque des revendications précédentes, dans laquelle l'élément de support (20) comprend de deuxièmes surfaces fonctionnelles (45-2) pour la réalisation d'une deuxième liaison à un deuxième moyen de couplage, dans laquelle les premières surfaces fonctionnelles (45-1) sont accessibles par ladite première ouverture (40-1) dans une face extérieure, et dans laquelle lesdites deuxièmes surfaces fonctionnelles (45-2) sont accessibles par au moins une deuxième ouverture (40-2) dans une face extérieure opposée.

9. Installation de fabrication selon l'une quelconque des revendications 1 à 7, dans laquelle l'élément de support (20) comprend de deuxièmes surfaces fonctionnelles (45-2) pour la réalisation d'une deuxième liaison à un deuxième moyen de couplage, dans laquelle les deuxièmes surfaces fonctionnelles (45-2) sont accessibles par au moins une ouverture (40-1) côté fond, et dans laquelle lesdites premières surfaces fonctionnelles (45-1) sont accessibles par des ouvertures latérales (40-2).

10. Installation de fabrication selon la revendication 9, dans laquelle les deuxièmes surfaces fonctionnelles et moyens de couplage comprennent des moyens magnétiques.

11. Installation de fabrication selon l'une quelconque des revendications 1 à 8, dans laquelle des moyens magnétiques (77) sont associés à la zone de nappe extérieure de l'élément de support, qui constituent de deuxièmes surfaces fonctionnelles pour la réalisation d'un couplage magnétique côté extérieur avec un deuxième moyen de couplage.
